# EUROPÄISCHE PATENTSCHRIFT

(11) **EP 2 861 879 B1**
(45) Veröffentlichungstag und Bekanntmachung des Hinweises auf die Patenterteilung: **05.07.2017**
(21) Anmeldenummer: 13726102.0
(22) Anmeldetag: 07.05.2013
(51) Int. Cl.: F16C 27/06, B62D 1/16

(54) **GLEITLAGER FÜR EINE LENKSPINDEL**
PLAIN BEARING FOR A STEERING SPINDLE
PALIER LISSE POUR UN ARBRE DE DIRECTION

(30) Priorität: 14.06.2012 DE 102012105151
(43) Veröffentlichungstag der Anmeldung: 22.04.2015
(73) Patentinhaber: ThyssenKrupp Presta Aktiengesellschaft, 9492 Eschen (LI); thyssenkrupp AG, 45143 Essen (DE)
(72) Erfinder: DOMIG, Markus, A-6781 Bartholomäberg (AT); RAICH, Thomas, A-6773 Vandans (AT)
(74) Vertreter: thyssenkrupp Intellectual Property GmbH
(86) Internationale Anmeldenummer: PCT/EP2013/001345
(87) Internationale Veröffentlichungsnummer: WO 2013/185868

(56) Entgegenhaltungen:
- EP-A1- 0 755 843
- EP-A2- 0 719 695
- EP-A2- 0 836 980
- DE-A1- 2 206 193
- DE-A1- 3 041 882
- FR-A1- 2 656 393
- GB-A- 1 275 417
- US-A- 2 851 314
- US-A- 5 797 685

## Beschreibung

Die Erfindung bezieht sich auf ein Gleitlager für eine Lenkspindel einer Lenksäule für ein Kraftfahrzeug mit einem Innenring zur Aufnahme und gleitenden Lagerung der Lenkspindel, wobei der Innenring von einem Außenring umgeben ist und dass zwischen dem Innenring und dem Außenring elastische Zwischenstücke angeordnet sind, wobei ein jeweiliges elastisches Zwischenstück im unbelasteten Zustand des Gleitlagers den Innenring bezogen auf die radiale Richtung am Ort des Zwischenstücks im Abstand vom Außenring hält und bei einer auf den Innenring wirkenden, in die radiale Richtung nach außen gerichteten Kraft komprimierbar ist, wobei der Innenring bei Überschreiten eines Grenzwertes der radialen Kraft am Außenring anschlägt. Weiters bezieht sich die Erfindung auf eine Lenksäule für ein Kraftfahrzeug mit einem derartigen Gleitlager.

Bekannt sind längenverstellbare Lenksäulen, bei denen die Manteleinheit, die eine das Lenkrad tragende Welle der Lenkspindel drehbar lagert, in Längsrichtung der Lenkspindel verstellbar ist. In einer vorteilhaften Ausführung weist hierbei die Lenk-spindel zwei gegeneinander teleskopierbare Wellen auf, wobei die an das Lenkrad anschließende (bezogen auf die Fahrtrichtung) hintere Welle gegenüber der Mante-leinheit über erste und zweite Wälzlager drehbar gelagert und in axialer Richtung unverschiebbar gehalten ist. Die gegenüber der hinteren Welle teleskopierbare vor-dere Welle ist gegenüber einem in axialer Richtung der Lenkwelle unverschiebbaren Gehäuseteil der Lenksäule mittels eines dritten Lagers, das von einem Gleitlager gebildet wird, drehbar gelagert. Dieses Gleitlager stützt hierbei die untere Welle gegen eine axiale Verschiebung gegenüber dem sie lagernden Gehäuseteil ab.

Bei einer solchen Lenksäule, bei der die hintere Welle in der Manteleinheit durch zwei Lager gelagert ist, führt die Anordnung eines dritten Lagers zu einer Überbe-stimmung, die nur durch enge Toleranzanforderungen zu einem technisch befriedi-genden Resultat führt. Das dritte Lager ist hierbei, um einen durch Toleranzen der Welle und ihrer Lagerung über das erste und zweite Lager hervorgerufenen Schlag der Welle ausgleichen zu können, herkömmlicherweise als Pendellager ausgebildet. Das Pendellager ist in einem dieses umgebenden Lagertopf angeordnet, der die Schnittstelle zwischen dem Pendellager und dem das dritte Lager haltenden Teil der Lenksäule bildet und zum Ausgleich von Toleranzen dient. Um einen Überlastschutz für das dritte Lager bereitzustellen, ist axial neben dem dritten Lager eine Stahl-scheibe auf der Welle angeordnet. Hohe, auf das dritte Lager in radialer Richtung wirkende Kräfte entstehen beispielsweise beim Rutschkupplungstest für den übli-cherweise direkt neben dem dritten Lager positionierten Raststern. Dieser dient zusammen mit einem in ihn eingreifenden Raststift zur Ausbildung einer Lenkradsper-re. Wenn im geschlossenen Zustand der Lenkradsperre das Lenkrad mit hoher Kraft gedreht wird, muss der Raststern auf der Welle durchrutschen können.

Ein Nachteil der beschriebenen herkömmlichen Ausbildung des Gleitlagers ist des-sen mehrteiliger Aufbau (Pendellager, Lagertopf, Stahlscheibe) mit den hiermit ver-bundenen Kosten und dem resultierenden Gewicht der Anordnung.

Aus der EP 0 836 980 B1 ist ein Gleitlager zur drehbaren Lagerung einer Welle einer Lenkspindel bekannt, welches eine Hülse und einen Halter umfasst. Die Hülse be-sitzt einen zylindrischen Abschnitt und von diesem axial abstehend eine Mehrzahl von durch Schlitzen getrennte Fortsätze, deren axialen Endabschnitte an ihren Innenseiten die Lagerfläche bilden. An ihren gegenüberliegenden Außenseiten weisen die Fortsätze Rastnasen auf. Der Halter ist über die Rastnasen auf die Fortsätze aufgeschnappt und besitzt einen ebenen, rechtwinkelig zur Längsachse stehenden Abschnitt und schräge, über den ebenen Abschnitt des Halters radial nach außen vorspringende Haltezungen. Diese blockieren eine Bewegung des Lagers gegenüber dem das Lager aufnehmenden Gehäuseteil in axialer Richtung.

Aus der US 2 851 314 A ist ein Gleitlager mit den eingangs genannten gattungsgemäßen Merkmalen bekannt. Dabei sind zwischen dem Innenring und dem Außenring über den Umfang umlaufende elastische Körper angeordnet. Die elastischen Körper ermöglichen einen Ausgleich von Toleranzen der Welle. Beim Einwirken großer Radialkräfte kann jedoch eine ungünstige Krafteinleitung erfolgen, wodurch unkontrollierte Gegenkräfte des Lagers auftreten können. Dadurch kommt es zu nachteiligen Lagerverhältnissen. Darüber hinaus ist der Aufbau relativ aufwendig.

Ein ähnlich aufgebautes Gleitlager ist aus der GB 1 275 417 A bekannt. Dieses hat jedoch ebenfalls die genannten Nachteile.

Aufgabe der Erfindung ist es ein kostengünstiges und gewichtsparendes Gleitlager der eingangs genannten Art bereitzustellen, von dem Abweichungen der vom Gleit-lager gelagerten Welle der Lenkspindel gegenüber einer zentrierten und/oder axial ausgerichteten Lage am Ort des Gleitlagers begrenzt aufnehmbar sind und von dem hohe radiale Kräfte aufgenommen werden können.

Erfindungsgemäß gelingt dies durch ein Gleitlager mit den Merkmalen des An-spruchs 1 dadurch, dass am Innenring mindestens eine den Innenring radial nach außen und/oder am Außenring mindestens eine den Außenring radial nach innen überragende Nase angeordnet ist, die in eine Ausnehmung im anderen der beiden Ringe eingreift.

Beim Gleitlager gemäß der Erfindung wird der Innenring, der im Einsatzzustand die Lenkspindel umgibt und gleitend lagert, von einem Außenring umgeben, wobei zwischen dem Innenring und dem Außenring elastische Zwischenstücke angeordnet sind, die einen zwischen dem Innenring und dem Außenring vorliegenden Spalt überbrücken. Im unbelasteten Zustand des Gleitlagers halten die elastischen Zwischenstücke den Innenring bezogen auf die radiale Richtung mit einem Abstand vom Außenring. Bei einer auf den Innenring wirkenden, in die radiale Richtung gerichteten Kraft kommt es zu einer Verschiebung des Innenrings in die radiale Richtung, wobei mindestens eines der elastischen Zwischenstücke komprimiert wird. Wenn für die radiale Kraft ein Grenzwert überschritten wird, schlägt der Innenring an den Außenring an. Der Abstand zwischen dem Außenring und dem Innenring, dessen Wert im Bereich des Zwischenstücks zunächst größer als Null war, hat sich dann infolge der Kompression des jeweiligen Zwischenstücks im Bereich des jeweiligen Zwischenstücks bis zu Null reduziert. Dabei kann als Bereich des Zwischenstücks der Bereich, der unmittelbar neben oder beabstandet neben dem jeweiligen Zwischenstück angeordnet ist, bezeichnet werden. Die den Grenzwert überschreitende radiale Kraft wird damit direkt vom Innenring auf den Außenring übertragen.

Ein erfindungsgemäßes Gleitlager kann vorteilhafterweise sehr leicht ausgebildet sein, wobei es eine hohe Stabilität aufweist. Abweichungen der gelagerten Welle in radialer Richtung gegenüber ihrer axial zentrierten Ausrichtung und in ihrer Winkelstellung gegenüber ihrer zur vorgesehenen Längsachse parallelen Anordnung können über einen begrenzten Bereich aufgenommen werden. Bei einer Überschreitung dieses Bereichs können Kräfte direkt vom Innenring auf den Außenring übertragen werden.

Der radiale Verschiebeweg des Innenrings, bis er an den Außenring anschlägt, beträgt ausgehend von seinem unbelasteten Zustand in alle radiale Richtungen vorzugsweise mindestens 0,3mm, wobei ein Wert von weniger als 1mm bevorzugt ist.

Vorteilhafterweise sind mindestens drei in Umfangsrichtung, insbesondere gleich-mäßig, verteilte Zwischenstücke vorhanden, die zwischen dem Innenring und dem Außenring angeordnet sind. Eine mögliche Ausführungsform sieht gerade vier jeweils im Winkel von 90° voneinander beabstandete Zwischenstücke vor.

Erfindungsgemäß ist am Innenring mindestens eine Nase angeordnet, die den Innenring radial nach außen überragt und in eine Ausnehmung im Außenring eingreift. Alternativ oder zusätzlich dazu kann am Außenring mindestens eine Nase angeordnet sein, die den Außenring radial nach innen überragt und in eine Ausnehmung im Innenring eingreift. Vorzugsweise sind am Innenring und/oder am Außenring mindestens zwei in Umfangsrichtung, insbesondere gleichmäßig, voneinander beabstandete Nasen angeordnet, die jeweils in eine Ausnehmung im anderen der beiden Ringe eingreifen. Beispielsweise können am Innenring und/oder am Außenring zwei solche gegenüberliegende Nasen angeordnet sein.

Durch diese Nase bzw. Nasen, die in die Ausnehmung bzw. jeweilige Ausnehmung eingreifen, kann ein formschlüssig wirkender Anschlag zwischen dem Innenring und dem Außenring in Bezug auf die Umfangsrichtung (=Drehrichtung um die Längsmittelachse des Gleitlagers) und/oder in Bezug auf die axiale Richtung erreicht werden. Zwischen der Nase bzw. jeweiligen Nase und der Ausnehmung, in welche sie eingreift, liegt vorteilhafterweise sowohl in die Umfangsrichtung als auch in die axiale Richtung ein relativ großes Spiel vor. Vorzugsweise beträgt das Spiel in die Umfangsrichtung mindestens 0,2mm, wobei ein Spiel von weniger als 1mm bevorzugt ist. Vorzugsweise beträgt das Spiel in die axiale Richtung mindestens 0,2mm, wobei ein Spiel von weniger als 1 mm bevorzugt ist. Im unbelasteten Zustand des Gleitlagers kann die (jeweilige) Nase günstigerweise zentriert in der (jeweiligen) Ausnehmung angeordnet sein.

Wenn man die mindestens eine Nase als Teil des Rings ansieht, an dem sie angeordnet ist, so ist abgesehen von der mindestens einen Umfangsstelle, an der die Nase bzw. eine jeweilige Nase liegt, der Innendurchmesser des Außenrings um den gesamten Umfang größer als der Außendurchmesser des Innenrings.

Die Nase bzw. jeweilige Nase kann materialeinstückig mit dem Innenring bzw. Außenring ausgebildet sein, insbesondere durch Anspritzen. Auch eine andere Art der Befestigung ist grundsätzlich denkbar und möglich, z.B. durch Ankleben.

In einer vorteilhaften Ausführungsform ist der Innenring geschlitzt ausgebildet, wobei er an einer einzigen Stelle seines Umfangs eine Unterbrechung aufweist. Dadurch kann er unter Vergrößerung seines Innendurchmessers auf die Lenkspindel bis zur Lagerstelle aufgeschoben werden, wobei zur Vergrößerung seines Innendurchmessers die Elastizität des Materials des Innenrings ausgenützt wird und die elastischen Zwischenstücke komprimiert werden. Vorzugsweise kann der Innendurchmesser des Innenrings um mindestens 3%, besonders bevorzugt mindestens 5%, aufgeweitet werden. An der Lagerstelle kann die Lenkspindel günstigerweise eine Nut aufweisen, in welche der Innenring einschnappt. Auf diese Weise kann das Gleitlager die Lenkspindel bzw. die entsprechende Welle der Lenkspindel in einfacher Weise in axialer Richtung abstützen.

Günstigerweise bestehen die Zwischenstücke, deren Material wesentlich elastischer, vorzugsweise mindestens fünf mal elastischer, als das Material des Innenrings und das Material des Außenrings ist, aus einem elastomeren Werkstoff, beispielsweise einem Gummielastomer. In einer möglichen Ausführungsform sind die Zwischenstücke am Innenring und/oder am Außenring angespritzt. Es kann dadurch eine einfache Herstellung, Logistik und Montage erreicht werden. Entsprechende Spritzgussverfahren sind als ZweiKomponenten-Spritzgussverfahren bekannt. Auch eine andere Befestigung am Innenring und/oder Außenring, beispielsweise durch Ankleben oder Anvulkanisieren, ist möglich. Vorteilhafterweise kann ein erfindungsgemäßes Gleitlager zur Lagerung einer Lenk-spindel einer in Längsrichtung der Lenkspindel verstellbaren Lenksäule eingesetzt werden. Insbesondere für die Fälle, in denen die Lenkspindel eine erste und eine zweite Welle umfasst, die zueinander teleskopierbar ausgebildet sind, wird das er-findungsgemäße Gleitlager mit Vorteil eingesetzt. Das Gleitlager kann hierbei güns-tigerweise die von ihm gelagerte Welle in axialer Richtung abstützen.

In einer vorteilhaften Ausführungsform wird die Lenkspindel zusätzlich von zwei wei-teren Lagern gelagert, die näher beim lenkradseitigen Ende der Lenkspindel ange-ordnet sind und die insbesondere von Wälzlagern gebildet werden.

Mit besonderem Vorteil sind die zwei Lager, die näher beim lenkradseitigen Ende der Lenkspindel angeordnet sind, beide zur drehbaren Lagerung der ersten Welle der Lenkspindel angeordnet, die das lenkradseitige Ende der Lenkspindel umfasst, und das erfindungsgemäße Gleitlager ist zur Lagerung der zweiten Welle angeord-net, die zu dieser ersten Welle teleskopierbar angeordnet ist.

Weitere Vorteile und Einzelheiten der Erfindung werden im Folgenden anhand der beiliegenden Zeichnung erläutert. In dieser zeigen:
Fig. 1 eine Ansicht eines Gleitlagers gemäß der Erfindung (in Richtung der Längsmittelachse des Gleitlagers gesehen);
Fig. 2 eine Seitenansicht des Gleitlagers von Fig. 1 (rechtwinkelig zur Längsmittel-achse gesehen);
Fig. 3 eine Schrägsicht;
Fig. 4 eine Explosionsdarstellung des Gleitlagers von Fig. 1;
Fig. 5 und 6 Seitenansichten von zwei möglichen Ausbildungsformen von Wellen von Lenkspindeln, die vom erfindungsgemäßen Gleitlager gelagert werden;
Fig. 7 und 8 Schrägsichten der Wellen von Fig. 5 und 6;
Fig. 9 und 10 ein Ausführungsbeispiel für eine Lenksäule mit einer von einem erfindungsgemäßen Gleitlager gelagerten Lenkspindel in Schrägsicht und in Ansicht;
Fig. 11 einen Schnitt entlang der Linie AA von Fig. 10.

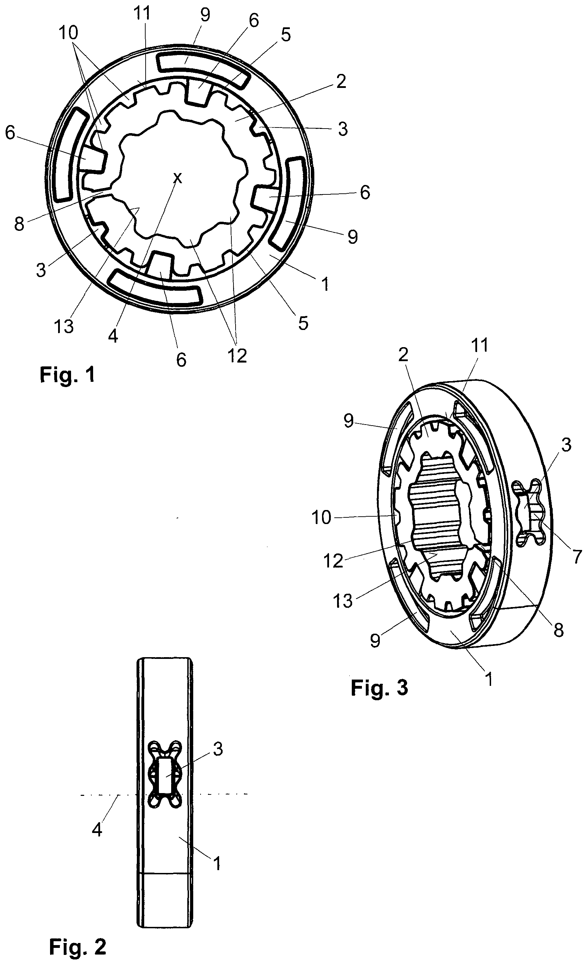

Ein Ausführungsbeispiel eines Gleitlagers gemäß der Erfindung ist in den Fig. 1 bis 4 dargestellt.

Das Gleitlager weist einen eine Längsmittelachse 4 umgebenden Außenring 1 auf, der in einem Gehäuseteil einer Lenksäule montiert werden kann, um das Gleitlager ortsfest gegenüber dem Gehäuseteil zu halten. Der Außenring 1 ist dann drehfest und in axialer Richtung unverschiebbar im Gehäuseteil der Lenksäule gehalten. Wei-ters weist das Gleitlager einen Innenring 2 auf, von dem die zu lagernde Welle der Lenkspindel umgeben wird und gleitend gelagert wird. Die Lenkspindel ist also im vom Innenring 2 umgebenen Innenraum angeordnet. Abgesehen von den weiter unten beschriebenen, am Innenring angeordneten Nasen 3 ist der Außendurchmes-ser des Innenrings 2 über seinen gesamten Umfang, d.h. über die gesamte Erstre-ckung um die Längsmittelachse 4 des Gleitlagers, kleiner als der Innendurchmesser des Außenrings 1. Es wird dadurch zwischen dem Innenring 2 und dem Außenring 1 ein Spalt 5 ausgebildet. Der Innenring 2 hat entsprechend der Spaltbreite entlang seinem Umfang einen Abstand vom Außenring 1.

Zwischen dem Innenring 2 und dem Außenring 1 sind elastische Zwischenstücke 6 angeordnet, welche somit den Spalt 5 zwischen dem Innenring 2 und dem Außen-ring 1 überbrücken. Ein jeweiliges elastisches Zwischenstück 6 hält den Innenring 2 an der Stelle, an welcher es angeordnet ist, in radialer Richtung bezüglich der Längsmittelachse 4 im Abstand vom Außenring 1, wenn auf das Gleitlager keine äu-ßeren Kräfte einwirken, also im unbelasteten Zustand des Gleitlagers. Im unbelaste-ten Zustand des Gleitlagers wird der Innenring 2 durch die Zwischenstücke 6 inner-halb des Außenrings 1 zentriert, d.h. der Innenring 2 und der Außenring 1 sind koa-xial zueinander.

Wenn an der Stelle eines Zwischenstücks 6 auf den Innenring 2 eine Kraft einwirkt, die in die auf die Längsmittelachse 4 bezogene radiale Richtung an der Stelle dieses Zwischenstücks nach außen wirkt oder die zumindest eine solche Komponente auf-weist, so wird das jeweilige Zwischenstück 6 komprimiert und der Abstand zwischen Innenring 2 und Außenring 1 wird in einem Bereich, der unmittelbar neben oder be-abstandet neben dem jeweiligen Zwischenstück 6 angeordnet ist, verringert. Bei Überschreiten eines Grenzwerts der radialen Kraft bzw. der radial gerichteten Kom-ponente der Kraft wird das Zwischenstück 6 so weit komprimiert, dass der Innenring 2 in Bereichen, die unmittelbar neben oder beabstandet neben (wobei der Abstand vorzugsweise weniger als ein Sechstel des gesamten Umfangs beträgt) dem Zwi-schenstück 6 liegen, am Außenring 1 anschlägt. Die elastische Entkopplung zwi-schen dem Innenring 2 und dem Außenring 1 wird also aufgehoben und der Innen-ring geht am Außenring auf Block.

Im Ausführungsbeispiel sind vier, in Umfangsrichtung jeweils um 90° beabstandete elastische Zwischenstücke 6 vorhanden. Es könnten auch mehr als vier, vorzugsweise in Umfangsrichtung gleichmäßig beabstandete, Zwischenstücke 6 vorgesehen sein. Andererseits könnten auch nur drei, in Umfangsrichtung, vorzugsweise jeweils um 120°, beabstandete Zwischenstücke 6 vorhanden sein.

Am Innenring 2 sind an zwei bezogen auf die Längsmittelachse 4 gegenüberliegen-den Stellen, also im auf die Umfangsrichtung bezogenen Abstand von 180°, Nasen 3 angeordnet, die vom Innenring 2 radial nach außen abstehen. Eine jeweilige Nase 3 ragt in eine Ausnehmung 7 im Außenring 1, in der sie in radialer Richtung verschieb-bar aufgenommen ist. Im Ausführungsbeispiel sind die Ausnehmungen 7 in Form von Fensteröffnungen ausgebildet, die den Außenring 1 radial durchsetzen. Bei-spielsweise wäre es auch denkbar und möglich, die Ausnehmungen 7 in Form von sacklochartigen Vertiefungen auszubilden, welche an der inneren Oberfläche des Außenrings 1 angeordnet sind.

Die Nasen 3 könnten auch am Außenring 1 angeordnet sein und in eine Ausneh-mung im Innenring ragen, die beispielsweise als den Innenring radial durchsetzende Fensteröffnung ausgebildet ist.

Es könnten auch mehr als zwei, vorzugsweise in Umfangsrichtung gleichmäßig beabstandete, Nasen 3 vorgesehen sein, die in eine jeweilige Ausnehmung 7 ragen. Denkbar und möglich wäre es auch nur eine Nase 3 am Innenring 2 oder Außenring 1 vorzusehen, die in eine Ausnehmung 7 im anderen Ring 1, 2 ragt.

Auch sowohl am Innenring 2 als auch am Außenring 1 angeordnete Nasen, die in eine jeweilige Ausnehmung am anderen der beiden Ringe 1, 2 ragen, sind denkbar und möglich.

Durch die mindestens eine Nase 3, die in die zugeordnete Ausnehmung 7 ragt, kann die axiale Verschiebbarkeit des Innenrings gegenüber dem Außenring begrenzt werden. Weiters kann dadurch die Verdrehbarkeit des Innenrings 2 gegenüber dem Außenring 1 in Bezug auf die Längsmittelachse 4 begrenzt werden.

Vorzugsweise ist sowohl in die axiale Richtung als auch in die Umfangsrichtung zwi-schen einer jeweiligen Nase 3 und dem Rand der Ausnehmung 7, in der sie ange-ordnet ist ein relativ großes Spiel von mindestens 0,2mm vorhanden. Im unbelaste-ten Zustand des Gleitlagers liegen die Nasen 3 günstigerweise zentriert in den Aus-nehmungen 7.

Die Nasen 3 sind im Ausführungsbeispiel einstückig am Innenring 2 angeformt, wie dies bevorzugt ist.

Der Innenring 2 ist geschlitzt (=offen) ausgebildet, wobei er an einer einzelnen Stelle seiner Umfangserstreckung einen Schlitz 8 aufweist. Dadurch wird das axiale Ein-schieben der zu lagernden Welle in den Innenring 2 ermöglicht oder zumindest er-leichtert, indem der Innendurchmesser des Innenrings 2 unter Aufweitung des Schlitzes 8 vergrößert werden kann. Dieses Aufbiegen des Innenrings 2 erfolgt ge-gen die Elastizität des Materials des Innenrings 2. Weiters dient ein derartiger Schlitz 8 auch zur Darstellung eines Temperaturausgleichs, bei dem die Schlitzbreite sich verringern oder vergrößern kann.

Die Elastizität des Materials des Innenrings 2, ebenso wie die Elastizität des Materials des Außenrings 1, ist aber wesentlich kleiner als die Elastizität des Materials der Zwischenstücke 6. Vorzugsweise beträgt die Elastizität des Materials des Innenrings 2 und die Elastizität des Materials des Außenrings 1 jedenfalls weniger als ein Fünftel der Elastizität des Materials der Zwischenstücke 6.

Der Außenring 1 ist mit mehreren in Umfangsrichtung voneinander beabstandeten Fensteröffnungen 9 versehen, die den Außenring 1 in axialer Richtung durchsetzen. Es wird dadurch die Flexibilität des Außenrings 1 erhöht. Dadurch können größere Toleranzen des Gehäuseteils aufgenommen werden, in welches der Außenring 1 eingesetzt wird.

Die Fensteröffnungen 9 liegen im Ausführungsbeispiel in den Umfangsbereichen, in welchen die Zwischenstücke 6 zwischen dem Innenring 2 und dem Außenring 1 an-geordnet sind.

Der Außenring 1 und der Innenring 2 können beispielsweise aus dem gleichen Kunststoff oder aus unterschiedlichen Kunststoffen bestehen. Der Innenring 2 kann hierbei insgesamt aus einem Kunststoff mit besonders guten Gleiteigenschaften ausgebildet sein, z.B. aus PEEK oder aus einem zumindest zum Großteil aus PEEK bestehenden Kunststoff, oder im Bereich seiner der zu lagernden Welle zugewand-ten Innenfläche mit einem solchen Kunststoffbeschichtet sein. Mit Vorteil können auch Kombinationen von Werkstoffen aus PEEK mit zusätzlich einem der Werkstoffe PTFE und/oder Graphit und/oder Kohlenstofffasern eingesetzt werden. Ein etwa 10%iger Volumenanteil von PTFE und ein etwa 30%iger Anteil von Graphit und ein etwa 30%iger Anteil von Kohlenstofffasern haben sich als vorteilhaft erwiesen.

Als Kunststoff für den Außenring und/oder das Basismaterial des Innenrings kom-men beispielsweise PEEK, PTFE oder POM in Frage.

Die Zwischenstücke 6 bestehen aus einem elastomeren Werkstoff, vorzugsweise aus einem Gummielastomer, wobei die Zwischenstücke 6 auch als Gummipuffer be-zeichnet werden könnten.

Der Innenring 2 besitzt an seiner dem Außenring 1 zugewandten Außenseite eine Mehrzahl von über seinen Umfang verteilten Vertiefungen 10. Die äußeren Oberflä-chen der zwischen diesen Vertiefungen 10 liegenden Erhöhungen bilden Anlageflä-chen 11 zur Anlage an der Innenseite des Außenrings 1, wenn der Innenring 2 gegen den Außenring 1 auf Block geht. Die Zwischenstücke 6 ragen in solche Vertiefungen 10 an der Außenseite des Innenrings 2 und sind in diesen gehalten, beispielsweise durch Anspritzen an den Innenring 2 oder durch Ankleben.

An seiner vom Außenring 1 abgewandten also der Längsmittelachse 4 zugewandten Innenseite besitzt der Innenring 2 eine Mehrzahl von über seinen Umfang verteilten Vertiefungen 12. Die innere Oberfläche der zwischen den Vertiefungen 12 liegenden Erhöhungen bilden die mit der zu lagernden Welle zusammenwirkende Gleitfläche 13. Die Größe des Spalts 5 zwischen den von den jeweiligen Erhebungen gebildeten Abschnitten der Gleitfläche 13 und der Innenfläche des Außenrings 1 ist im unbelas-teten Zustand des Gleitlagers günstigerweise über den gesamten Umfang gleich.

Durch die Vertiefungen 10, 12 wird die Elastizität des Innenrings 2 erhöht.

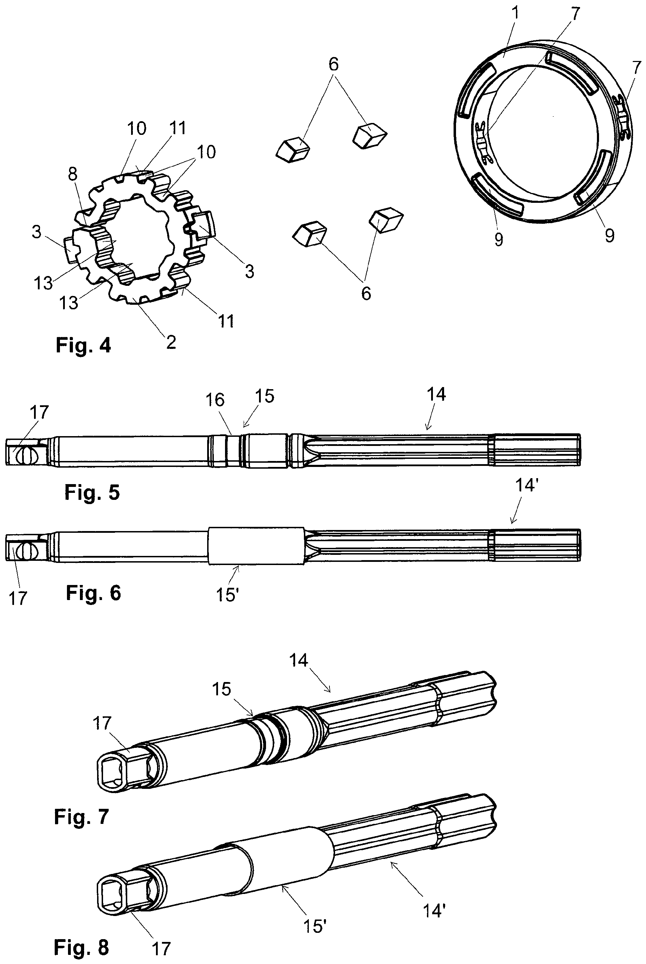

Ein erstes Ausführungsbeispiel für eine vom erfindungsgemäßen Gleitlager lagerba-ren Welle 14, die Teil einer Lenkspindel einer Lenksäule ist, ist in den Fig. 5 und 7 dargestellt. Diese Welle 14 besitzt über einen Abschnitt ihrer Längserstreckung eine von der Kreisform abweichende Querschnittsform, insbesondere "Kleeblattform", um mit einer weiteren Welle der Lenkspindel in drehfester, aber axial verschiebbarer (= teleskopierbaren) Verbindung zu stehen. Diese weitere Welle weist dann in be-kannter Weise einen in axialer Richtung sich erstreckenden Hohlraum mit einer kor-respondierenden inneren Umfangskontur auf.

An der Lagerstelle 15, an der die Welle 14 vom Gleitlager gleitend gelagert wird, weist die Welle 14 eine Ringnut 16 auf. Wenn die Welle 14 axial in den Innenring 2 eingeschoben wird, dehnt sich dieser unter Aufweitung des Schlitzes 8 zunächst ra-dial aus (unter Kompression der Zwischenstücke 6), bis die Ringnut 16 den Innenring 2 erreicht und der Innenring 2 in die Ringnut 16 einschnappt. Die Welle 14 kann dadurch vom Gleitlager axial abgestützt werden.

Am der Kleeblattkontur gegenüberliegenden Ende ist die Welle 14 im Ausführungs-beispiel mit einem Verbindungszapfen 17 ausgebildet, über welchen die Welle 14 mit einem Kardangelenk, und über dieses mit weiteren nicht dargestellten Teilen einer Lenkungseinrichtung, verbunden wird.

Die Fig. 6 und 8 zeigen eine weitere mögliche Ausführungsform einer von einem erfindungsgemäßen Gleitlager zu lagernden Welle 14'. Die Welle 14' besitzt hier im Bereich der Lagerstelle 15' und in axial beidseitig daran anschließenden Abschnitten ihrer Längserstreckung eine durchgehende zylindrische Oberfläche. Bei der Welle 14' erfolgt somit durch das Gleitlager keine axiale Abstützung.

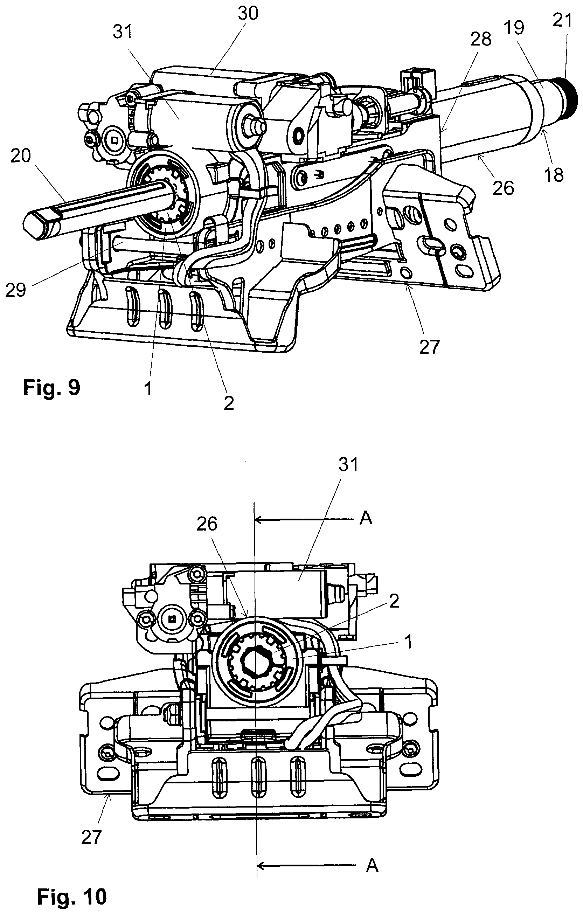

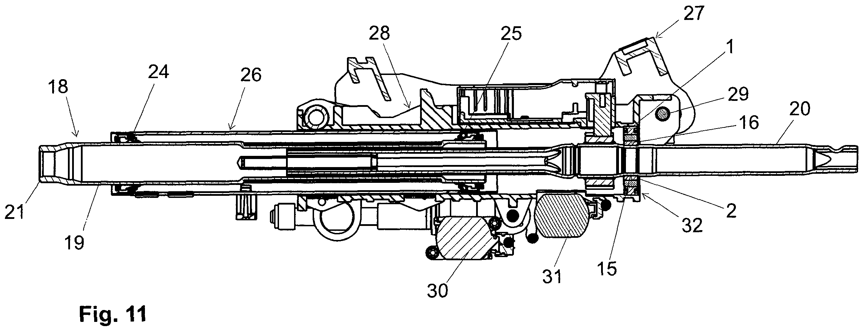

Die Fig. 9 bis 11 zeigen ein Beispiel für eine mögliche Ausbildung einer Lenksäule für ein Kraftfahrzeug, bei der ein erfindungsgemäßes Gleitlager zum Einsatz kom-men kann. Die Lenksäule weist eine Lenkspindel 18 auf, welche eine erste Welle 19 und eine zweite Welle 20 umfasst. Die bezogen auf die Fahrtrichtung weiter hinten liegende erste Welle 19 schließt an das lenkradseitige Ende der Lenkspindel 18 an, d.h. an ihrem in Fahrtrichtung gesehen hinteren Ende 21 wird das Lenkrad ange-bracht. Die erste Welle 19 ist drehfest aber axial verschiebbar (= teleskopierbar) mit der bezogen auf die Fahrtrichtung weiter vorne liegenden zweiten Welle 20 verbun-den, welche in diesem Ausführungsbeispiel als Hohlwelle ausgebildet ist und in die ebenfalls als Hohlwelle ausgebildete erste Welle 19 ragt.

Die hintere erste Welle 19 ist mittels ersten und zweiten Lagern 24, 25 drehbar ge-genüber einer Manteleinheit 26 der Lenksäule gelagert. Die ersten und zweiten La-ger 24, 25 sind als Wälzlager ausgebildet. Die zweite Welle 20 wird im dritten Lager, dem erfindungsgemäßen Gleitlager 32, drehbar gelagert.

Die Lenksäule weist eine an der Karosserie des Kraftfahrzeugs zu befestigende Tra-geinheit 27 auf, an der eine Schwenkeinheit 28 der Lenksäule um eine Schwenk-achse 29 verschwenkbar gelagert ist. Die Verschwenkbarkeit der Schwenkeinheit 28 um die Schwenkachse 29 dient zur Höhen- bzw. Neigungsverstellung der Lenksäule. Die Schwenkeinheit 28 nimmt die Manteleinheit 26 axial verschiebbar auf, um eine Längenverstellung der Lenksäule zu ermöglichen.

Im gezeigten Ausführungsbeispiel erfolgen die Höhen- bzw. Neigungsverstellung und die Längenverstellung der Lenksäule durch elektrische Antriebsmotoren 30, 31. Die Antriebsmotoren betätigen Spindeltriebe, wie dies bekannt ist. Anstelle einer elektrischen Verstellung der Lenksäule könnte diese auch manuell verstellbar sein. Zu diesem Zweck könnte eine beispielsweise manuell öffen- und schließbare Fest-stellvorrichtung vorhanden sein, in deren geöffnetem Zustand die Lenksäule verstellt werden kann und in deren geschlossenem Zustand die eingestellte Position der Lenksäule fixiert ist. Manuell oder automatisch verstellbare Lenksäulen sind in unter-schiedlichen Ausführungsformen bekannt. Die Art der Verstellbarkeit der Lenksäule ist nicht Gegenstand der vorliegenden Erfindung.

Die vordere Welle 20 der Lenkspindel 18 wird durch ein Gleitlager 32 gemäß der Erfindung gelagert. Das Gleitlager 32 stellt also ein drittes Lager zur Lagerung der Lenkspindel 18 dar, welches zusätzlich zu den Lagern 24, 25 vorhanden ist. Durch die flexible Verbindung zwischen dem Innenring 2 und dem Außenring 1 über die Zwischenstücke 6 können Abweichungen von der exakt koaxialen Anordnung der Welle 20 im Bereich der Lagerstelle 15 und exakt parallelen Ausrichtung der Welle 20 zur Längsmittelachse 4 des Gleitlagers 32 aufgenommen werden. Zu solchen Abweichungen kann es beispielsweise durch eine nicht exakt geradlinige Ausbildung der Lenkspindel 18 und/oder durch nicht exakt koaxiale Ausrichtungen der Lager 24, 25 kommen. Ohne diese Funktion dieses Gleitlagers 32 wäre die Konstruktion in Hinblick auf die zusätzlich vorhandenen Lager 24, 25 überbestimmt und die vorhandenen Toleranzfelder müssten sehr stark eingeschränkt werden.

An der Lagerstelle 15 der zweiten Welle 20 ist die zweite Welle 20 mit einer Ringnut 16 ausgebildet, durch welche das Gleitlager 32 die zweite Welle 20 gegen eine axia-le Verschiebekraft abstützt.

**Legende zu den Hinweisziffern:**

| | | | |
|---|---|---|---|
| 1 | Außenring | 16 | Ringnut |
| 2 | Innenring | 17 | Verbindungszapfen |
| 3 | Nase | 18 | Lenkspindel |
| 4 | Längsmittelachse | 19 | Welle |
| 5 | Spalt | 20 | Welle |
| 6 | Zwischenstück | 21 | Ende |
| 7 | Ausnehmung | 24 | erstes Lager |
| 8 | Schlitz | 25 | zweites Lager |
| 9 | Fensteröffnung | 26 | Manteleinheit |
| 10 | Vertiefung | 27 | Trageinheit |
| 11 | Anlagefläche | 28 | Schwenkeinheit |
| 12 | Vertiefung | 29 | Schwenkachse |
| 13 | Gleitfläche | 30 | Antriebsmotor |
| 14, 14' | Welle | 31 | Antriebsmotor |
| 15, 15' | Lagerstelle | 32 | Gleitlager |

## Patentansprüche

1. Gleitlager für eine Lenkspindel einer Lenksäule für ein Kraftfahrzeug, mit einem Innenring (2) zur Aufnahme und gleitenden Lagerung der Lenkspindel (18), wobei der Innenring (2) von einem Außenring (1) umgeben ist und dass zwischen dem Innenring (2) und dem Außenring (1) elastische Zwischenstücke (6) angeordnet sind, wobei ein jeweiliges elastisches Zwischenstück (6) im unbelasteten Zustand des Gleitlagers den Innenring (2) bezogen auf die radiale Richtung am Ort des Zwischenstücks (6) im Abstand vom Außenring (1) hält und bei einer auf den Innenring (2) wirkenden, in die radiale Richtung nach außen gerichteten Kraft komprimierbar ist, wobei der Innenring (2) bei Überschreiten eines Grenzwertes der radialen Kraft am Außenring (1) anschlägt, **dadurch gekennzeichnet,**
**dass** am Innenring (2) mindestens eine den Innenring (2) radial nach außen und/oder am Außenring (1) mindestens eine den Außenring (1) radial nach innen überragende Nase (3) angeordnet ist, die in eine Ausnehmung (7) im anderen der beiden Ringe (1, 2) eingreift.

2. Gleitlager nach Anspruch 1, **dadurch gekennzeichnet, dass** die mindestens ei-ne Nase (3) mit Spiel in der mindestens einen Ausnehmung (7) angeordnet ist.

3. Gleitlager nach Anspruch 1 oder 2, **dadurch gekennzeichnet, dass** mindestens zwei bezogen auf die Umfangsrichtung beabstandete Nasen (3) vorhanden sind, die in eine jeweilige Ausnehmung (7) eingreifen.

4. Gleitlager nach einem der Ansprüche 1 bis 3, **dadurch gekennzeichnet, dass** der Innenring (2) als geschlitzter Ring ausgebildet ist.

5. Gleitlager nach einem der Ansprüche 1 bis 4, **dadurch gekennzeichnet, dass** der Innenring (2) und/oder der Außenring (1) aus Kunststoff besteht.

6. Gleitlager nach einem der Ansprüche 1 bis 5, **dadurch gekennzeichnet, dass** die Zwischenstücke (6) aus einem elastomeren Werkstoff bestehen.

7. Gleitlager nach einem der Ansprüche 1 bis 6, **dadurch gekennzeichnet, dass** der Innenring (2) an seiner dem Außenring (1) zugewandten Außenseite eine Mehrzahl von über seinen Umfang verteilten Vertiefungen (10) aufweist.

8. Gleitlager nach Anspruch 7, **dadurch gekennzeichnet, dass** die Zwischenstücke (6) jeweils in eine der an der Außenseite des Innenrings (2) angeordneten Vertiefungen (10) ragen.

9. Gleitlager nach einem der Ansprüche 1 bis 8, **dadurch gekennzeichnet, dass** der Innenring (2) an seiner vom Außenring (1) abgewandten Innenseite eine Mehrzahl von über seinen Umfang verteilten Vertiefungen (12) aufweist.

10. Gleitlager nach einem der Ansprüche 1 bis 9, **dadurch gekennzeichnet, dass** der Außenring (1) mehrere, über seinen Umfang verteilte Fensteröffnungen (9) aufweist, die den Außenring (1) in axialer Richtung durchsetzen.

11. Lenksäule für ein Kraftfahrzeug mit einer Lenkspindel (18), **dadurch gekennzeichnet, dass** die Lenkspindel (18) von einem Gleitlager nach einem der Ansprüche 1 bis 10 gelagert ist.

12. Lenksäule nach Anspruch 11, **dadurch gekennzeichnet, dass** die Lenksäule in Längsrichtung der Lenkspindel (18) verstellbar ausgebildet ist, wobei die Lenk-spindel (18) erste und zweite teleskopierbare Wellen (19, 20) umfasst und das Gleitlager (32) die von ihm gelagerte Welle (20) in axialer Richtung abstützt.

13. Lenksäule nach Anspruch 11 oder 12, **dadurch gekennzeichnet, dass** die Lenk-spindel (18) zusätzlich von zwei weiteren, näher beim lenkradseitigen Ende der Lenkspindel (18) liegenden Lagern (24, 25) gelagert ist.

## Claims

1. Plain bearing for a steering spindle of a steering column for a motor vehicle, having an inner ring (2) for receiving and slidingly mounting the steering spindle (18), wherein the inner ring (2) is surrounded by an outer ring (1), and that elastic intermediate pieces (6) are arranged between the inner ring (2) and the outer ring (1), a respective elastic intermediate piece (6) holding the inner ring (2) at the location of the intermediate piece (6) at a spacing from the outer ring (1) in relation to the radial direction in the unloaded state of the plain bearing and being capable of being compressed in the case of a force which acts on the inner ring (2) and is directed outwards in the radial direction, the inner ring (2) bearing against the outer ring (1) if a limiting value of the radial force is exceeded, **characterized in that** at least one lug (3) which protrudes beyond the inner ring (2) radially to the outside is arranged on the inner ring (2) and/or at least one lug (3) which protrudes beyond the outer ring (1) radially to the inside is arranged on the outer ring (1), which lug (3) engages into a recess (7) in the other of the two rings (1, 2).

2. Plain bearing according to Claim 1, **characterized in that** the at least one lug (3) is arranged with play in the at least one recess (7).

3. Plain bearing according to Claim 1 or 2, **characterized in that** there are at least two lugs (3) which are spaced apart in relation to the circumferential direction and engage into a respective recess (7).

4. Plain bearing according to one of Claims 1 to 3, **characterized in that** the inner ring (2) is configured as a slotted ring.

5. Plain bearing according to one of Claims 1 to 4, **characterized in that** the inner ring (2) and/or the outer ring (1) are/is composed of plastic.

6. Plain bearing according to one of Claims 1 to 5, **characterized in that** the intermediate pieces (6) are composed of an elastomeric material.

7. Plain bearing according to one of Claims 1 to 6, **characterized in that**, on its outer side which faces the outer ring (1), the inner ring (2) has a plurality of depressions (10) which are distributed over its circumference.

8. Plain bearing according to Claim 7, **characterized in that** the intermediate pieces (6) protrude in each case into one of the depressions (10) which are arranged on the outer side of the inner ring (2).

9. Plain bearing according to one of Claims 1 to 8, **characterized in that**, on its inner side which faces away from the outer ring (1), the inner ring (2) has a plurality of depressions (12) which are distributed over its circumference.

10. Plain bearing according to one of Claims 1 to 9, **characterized in that** the outer ring (1) has a plurality of window openings (9) which are distributed over its circumference and penetrate the outer ring (1) in the axial direction.

11. Steering column for a motor vehicle having a steering spindle (18), **characterized in that** the steering spindle (18) is mounted by a plain bearing according to one of Claims 1 to 10.

12. Steering column according to Claim 11, **characterized in that** the steering column is of adjustable configuration in the longitudinal direction of the steering spindle (18), the steering spindle (18) comprising first and second telescopic shafts (19, 20), and the plain bearing (32) supporting the shaft (20) which is mounted by it in the axial direction.

13. Steering column according to Claim 11 or 12, **characterized in that** the steering spindle (18) is additionally mounted by two further bearings (24, 25) which lie closer to the steering wheel-side end of the steering spindle (18).

## Revendications

1. Palier lisse pour un arbre de direction d'une colonne de direction pour un véhicule automobile, comprenant une bague interne (2) pour recevoir et supporter de manière glissante l'arbre de direction (18), la bague interne (2) étant entourée par une bague externe (1) et des pièces intermédiaires élastiques (6) étant disposées entre la bague interne (2) et la bague externe (1), une pièce intermédiaire élastique respective (6), dans l'état non sollicité du palier lisse, retenant la bague interne (2) par rapport à la direction radiale à l'emplacement de la pièce intermédiaire (6) à distance de la bague externe (1), et pouvant être comprimée dans le cas d'une application d'une force orientée vers l'extérieur dans la direction radiale sur la bague interne (2), la bague interne (2), lors du dépassement d'une valeur limite de la force radiale, butant contre la bague externe (1),
**caractérisé en ce**
**qu'**au moins un ergot (3) saillant radialement vers l'extérieur au-delà de la bague interne (2) est disposé sur la bague interne (2) et/ou saillant radialement vers l'intérieur au-delà de la bague externe (1) est disposé sur la bague externe (1), lequel vient en prise dans un évidement (7) dans l'autre des deux bagues (1, 2).

2. Palier lisse selon la revendication 1, **caractérisé en ce que** l'au moins un ergot (3) est disposé avec jeu dans l'au moins un évidement (7).

3. Palier lisse selon la revendication 1 ou 2, **caractérisé en ce qu'**au moins deux ergots (3) espacés par rapport à la direction périphérique sont prévus, lesquels s'engagent dans un évidement respectif (7).

4. Palier lisse selon l'une quelconque des revendications 1 à 3, **caractérisé en ce que** la bague interne (2) est réalisée sous forme de bague fendue.

5. Palier lisse selon l'une quelconque des revendications 1 à 4, **caractérisé en ce que** la bague interne (2) et/ou la bague externe (1) se composent de plastique.

6. Palier lisse selon l'une quelconque des revendications 1 à 5, **caractérisé en ce que** les pièces intermédiaires (6) se composent d'un matériau élastomère.

7. Palier lisse selon l'une quelconque des revendications 1 à 6, **caractérisé en ce que** la bague interne (2) présente, au niveau de son côté extérieur tourné vers la bague externe (1), une pluralité de renfoncements (10) répartis sur sa périphérie.

8. Palier lisse selon la revendication 7, **caractérisé en ce que** les pièces intermédiaires (6) font saillie à chaque fois dans l'un des renfoncements (10) disposés sur le côté extérieur de la bague interne (2).

9. Palier lisse selon l'une quelconque des revendications 1 à 8, **caractérisé en ce que** la bague interne (2) présente, au niveau de son côté intérieur opposé à la bague externe (1), une pluralité de renfoncements (12) répartis sur sa périphérie.

10. Palier lisse selon l'une quelconque des revendications 1 à 9, **caractérisé en ce que** la bague externe (1) présente plusieurs ouvertures de fenêtre (9) réparties sur sa périphérie, qui traversent la bague externe (1) dans la direction axiale.

11. Colonne de direction pour un véhicule automobile comprenant un arbre de direction (18), **caractérisée en ce que** l'arbre de direction (18) est supporté par un palier lisse selon l'une quelconque des revendications 1 à 10.

12. Colonne de direction selon la revendication 11, **caractérisée en ce que** la colonne de direction est réalisée de manière déplaçable dans la direction longitudinale de l'arbre de direction (18), l'arbre de direction (18) comprenant un premier et un deuxième arbre télescopique (19, 20) et le palier lisse (32) supportant dans la direction axiale l'arbre (20) supporté par celui-ci.

13. Colonne de direction selon la revendication 11 ou 12, **caractérisée en ce que** l'arbre de direction (18) est en outre supporté par deux paliers supplémentaires (24, 25) situés plus près au niveau de l'extrémité de l'arbre de direction (18) du côté du volant de direction.
